# EUROPÄISCHE PATENTSCHRIFT

(11) **EP 3 362 489 B1**
(45) Veröffentlichungstag und Bekanntmachung des Hinweises auf die Patenterteilung: **24.07.2019**
(21) Anmeldenummer: 16775604.8
(22) Anmeldetag: 23.09.2016
(51) Int. Cl.: C08F 6/00, C08J 5/02, C08J 5/04, C08J 5/24, C08J 9/28, C08J 11/02, C08G 69/46, B29C 70/50, B29B 15/12, B29C 70/06, B01D 11/02, B29C 70/54, C08G 69/14

(54) **VERFAHREN ZUR ENTFERNUNG VON MONOMEREN UND/ODER OLIGOMEREN AUS EINEM DURCH POLYMERISATION ENTSTANDENEN BAUTEIL**
METHOD FOR REMOVING MONOMERS AND/OR OLIGOMERS FROM A COMPONENT FORMED DURING POLYMERIZATION
PROCÉDÉ D'ÉLIMINATION DE MONOMÈRES ET/OU D'OLIGOMÈRES DANS UNE PIÈCE OBTENUE PAR POLYMÉRISATION

(30) Priorität: 14.10.2015 DE 102015219948
(43) Veröffentlichungstag der Anmeldung: 22.08.2018
(73) Patentinhaber: Volkswagen Aktiengesellschaft, 38440 Wolfsburg (DE)
(72) Erfinder: BEHRENDT, Reiner, Nico, 95213 Münchberg (DE)
(86) Internationale Anmeldenummer: PCT/EP2016/072702
(87) Internationale Veröffentlichungsnummer: WO 2017/063850

(56) Entgegenhaltungen:
- EP-A1- 2 138 530
- DE-A1- 10 114 920

## Beschreibung

Die Erfindung betrifft ein Verfahren zur Entfernung von Monomeren und/oder Oligomeren aus einem durch Polymerisation entstandenen Bauteil nach Anspruch 1.

### Stand der Technik

Aus dem Stand der Technik ist das Problem bekannt, dass bei Bauteilen, die mittels einer Polymerisation entstanden sind, ein gewisser Monomer- und Oligomer-Restanteil im Bauteil verbleiben kann. Verantwortlich dafür ist vor allem der Trommsdorf-Norrish Effekt, der bei einem erhöhten Umsatz der Polymerisation auftritt. Er sorgt für eine Selbstbeschleunigung der Polymerisation durch eine abnehmende Wahrscheinlichkeit eines Kettenabbruchs durch Rekombination von reaktiven Kettenenden aufgrund der zunehmenden Unbeweglichkeit der entsprechenden wachsenden Polymerketten.

Ein im Bauteil verbleibender Restmonomer- und/oder Oligomeranteil kann allerdings für die Einsetzbarkeit des Bauteils sowie dessen Weiterverarbeitung kritisch sein. Zum Einen können die unerwünschten, im Bauteil verbleibenden Anteile einen eigentümlichen Geruch aufweisen, sodass die Einsetzbarkeit des Bauteils, bspw. hinsichtlich des Interieur-Bereichs eines Fahrzeuges, beschränkt ist. Ferner können die unerwünschten Substanzen "ausschwitzen" und somit auf der Oberfläche des Bauteils für eine Schmierfilm-Bildung sorgen, welche vor allem für anschließende Prozesse, wie bspw. eine Lackierung oder Fügeprozesse, insbesondere Kleben, kritisch sein kann.

Die oben beschriebene Problematik ist bspw. aus der DE 1 660 289 C3 bekannt, die offenbart, dass monomeres Caprolactam während der Lagerung von Bauteilen an deren Oberfläche diffundiert, wodurch eine klebrige oder raue Oberfläche entstehen kann. Gelöst wird dies im Stand der Technik durch das Waschen des Bauteils, bspw. in Wasser, um restliche Monomer- oder Oligomeranteile aus dem Bauteil zu lösen. Aus der DE 101 14 920 A1 ist ein Verfahren zur kontinuierlichen Extraktion von organischen Monomeren aus einem Reaktionsgemisch bekannt. Als Extraktionsmittel wird ein im überkritischen Zustand vorliegendes Gemisch aus Kohlendioxid und Kohlenwasserstoffen mit 1-4 C Atomen eingesetzt.

Ferner ist aus DE 3 840 293 A1 der Einsatz von einem überkritischen Extraktionsmittel zur Entfernung von niedermolekularen Anteilen bekannt. Dabei wird der Kunststoff allerdings unter Druck aufgeschmolzen und dessen Schmelze mit dem Extraktionsmittel gemischt. Ein derartiger Ansatz kommt für bereits gebildete Faserverbundkunststoffe nicht in Frage. In Bezug auf diese Werkstoffe könnte die Problematik lediglich dadurch umgangen werden, dass der auspolymerisierte, bereits von Restsubstanzen befreite Kunstsoff auf konventionellem Wege mit Fasern zu einem Faserverbundkunststoff verarbeitet wird, oder der Faserverbundkunststoff auf konventionellem Weg mittels Wasser von den unerwünschten Substanzen befreit wird. Nachteilig an erstgenannter Variante ist ein wesentlich aufwändigerer Herstellungsprozess des Faserverbundkunststoffs, wobei bei zweitgenannter Variante wünschenswert wäre, dass die Entfernung der restlichen Substanzen schonender und effektiver erfolgt.

Die Herstellung eines durch Polymerisation entstandenen Bauteils ist zum Beispiel aus der EP 2 138 530 A1 bekannt, die beschreibt, dass kontinuierlich zugeführte Verstärkungsfasern in einer Matrix eingebettet werden, um ein Faser-Kunstsoff-Verbund-Material herzustellen. Dieses Faser-Kunstsoff-Verbund-Material wird erwärmt, um eine Polymerisation der Matrix durchzuführen und wird anschließend wieder abgekühlt.

### Darstellung der Erfindung: Aufgabe, Lösung, Vorteile

Aufgabe der vorliegenden Erfindung ist es, ein Verfahren zur Entfernung von Monomeren und/oder Oligomeren aus einem durch Polymerisation entstandenen Bauteil bereitzustellen, das eine effektive, jedoch auch schonende Entfernung der vorherig genannten Substanzen erlaubt.

Erfindungsgemäß wird ein Verfahren zur Entfernung von Monomeren und/oder Oligomeren aus einem durch Polymerisation entstandenen Bauteil vorgeschlagen, das die Verwendung eines Extraktionsmittels zur Entfernung der Monomere und/oder Oligomere umfasst. Dabei umfasst das Bauteil faserverstärkten Kunststoff, und das Extraktionsmittel weist ein überkritisches Fluid auf.

Unter dem Begriff "Polymerisation" versteht man eine chemische Reaktion, bei der Monomere, umfassend eine reaktionsfähige Doppelbindung, insbesondere unter dem Einfluss von Katalysatoren und unter Auflösung der Mehrfachbindungen, zu Polymeren reagieren. Während Monomere somit als Ausgangsstoffe der Polymerisation verstanden werden können, sind Polymere Moleküle mit langen Ketten, bestehend aus miteinander verbundenen Monomeren.

Insbesondere zielt die Erfindung auf die Entfernung von Restmonomeren ab. Darunter sind die in einem Polymer verbleibenden Monomere zu verstehen, sprich die Monomere, die während der Polymerisation nicht in Polymere umgesetzt werden konnten. Oligomere hingegen sind bereits miteinander verbundene Monomere, die allerdings, insbesondere im Gegensatz zu den mithilfe der Polymerisation zu bildenden Polymeren niedermolekular sind. Die Monomere und/oder Oligomere sind als Verunreinigungen des Polymers zu sehen.

Das Bauteil ist durch Polymerisation entstanden. So umfasst das Bauteil mindestens ein aus der Polymerisation entstandenes Polymer. Ferner ist das Bauteil faserverstärkt ausgebildet. Insbesondere handelt es sich bei dem Bauteil um einen faserverstärkten Kunststoff. Somit ist das Bauteil bereits vor dem Verfahren zur Entfernung von Monomeren und/oder Oligomeren als faserverstärkter Kunststoff ausgebildet. Vorteilhafterweise wurde das Bauteil als faserverstärkter Kunststoff mittels der Polymerisation gebildet.

Als Extraktionsmittel wird ein überkritisches Fluid eingesetzt. Ein überkritisches Fluid zeichnet sich dadurch aus, dass keine Unterscheidung der Aggregatzustande flüssig oder gasförmig möglich ist, da sich das Fluid in einigen Eigenschaften, bspw. der Dichte, wie eine Flüssigkeit verhält, und in anderen Eigenschaften, bspw. der Viskosität, wie ein Gas.

Überkritische Fluide zeigen eine besonders gute Löslichkeit für niedermolekulare Stoffe und weisen zudem eine hohe Diffusibilität im Gegensatz zu den meisten flüssigen Lösungsmitteln auf. Die zu entfernenden Monomere und/oder Oligomere lösen sich in dem Extraktionsmittel und werden somit aus dem Bauteil entfernt. Die Monomere und/oder Oligomere liegen anschließend als gelöste Verunreinigungen in dem Extraktionsmittel vor. Für die Entfernung wird das Bauteil vorteilhafterweise in einen ersten Behälter gelegt, in dem es von dem Extraktionsmittel umflossen wird. Das Bauteil wird somit dem Extraktionsmittel ausgesetzt, wobei sich in dem Extraktionsmittel die Monomere und/oder Oligomere aus dem Bauteil lösen und in gelöster Form im Extraktionsmittel verbleiben. Insbesondere tritt durch die Behandlung mit dem Extraktionsmittel umfassend das überkritische Fluid keine morphologische Schädigung, bspw. eine Bläschenbildung auf der Oberfläche des Bauteils, auf. Die Verwendung eines Extraktionsmittels umfassend ein überkritisches Fluid hat den Vorteil, dass sich die Monomere und Oligomere als Verunreinigungen des Bauteils besonderes effektiv, jedoch auch schonend entfernen lassen. Dadurch treten insbesondere kein Ausschwitzen des Monomeranteils und die damit verbundenen Nachteile auf.

Insbesondere weist das Bauteil faserverstärktes Polyamid auf, wobei es sich bei den Restmonomoren insbesondere um Lactam-Monomere, ferner bevorzugt um Caprolactam-Monomere, handelt. Bevorzugterweise besteht das Bauteil aus faserverstärktem Polyamid, sprich aus einem Polyamid-FVK-Bauteil. Insbesondere handelt es sich bei dem Bauteil um ein, bevorzugterweise flaches, Halbzeug auf Polyamidmatrix.

Ferner kann das Bauteil Epoxidharz umfassen, worunter insbesondere Kunstharze mit Epoxidanteil zu verstehen sind. Auch in diesen Monomere und/oder Oligomere im Bauteil vorhanden sein, die mit den oben genannten Nachteilen einhergehen.

Vorteilhafterweise werden zur Polymerisation des Bauteils Caprolactame eingesetzt, insbesondere ε-Caprolactam und Laurinlactam (Laurolactam), die zu Polyamid-6 bzw. Polyamid-12 auspolymerisieren. Ein besonderer Nachteil von Caprolactamen ist allerdings deren eigentümlicher Geruch, der bspw. im Fall von ε-Caprolactam schon bei Konzentrationen ab 0,3 mg/m3 wahrgenommen wird. Durch das Verbleiben der Caprolactame als Restmonomere im Bauteil verbreitet das Bauteil ebenfalls den eigentümlichen Geruch, der für dessen Verwendung im Interieur-Bereich hinderlich ist. Nur durch eine effektive Entfernung der restlichen Lactamanteile, wie sie durch die vorliegende Erfindung vorgeschlagen wird, ist eine Befreiung des Bauteils von dem spezifischen, hinderlichen Geruch möglich, sodass die Einsetzbarkeit des Bauteils für den Interieur-Bereich ermöglicht wird.

Vorteilhafterweise umfasst das überkritische Fluid und somit das Extraktionsmittel überkritisches Kohlendioxid und/oder Methyl-*tert*.-butylether (MTBE), das bevorzugterweise auch in überkritischer Form vorliegen kann. Bevorzugterweise besteht das Extraktionsmittel ausschließlich aus überkritischen Kohlendioxid. Alternativ umfasst das Extraktionsmittel einen Anteil von überkritischen Kohlendioxid und einem weiteren Bestandteil, wie bspw. MTBE, als Cosolvent.

Der Vorteil der Verwendung von überkritischem Kohlendioxid ist, dass dessen Lösevermögen sehr hoch ist. Es ist mit dem Lösevermögen von Ethern, wie bspw. Diethylether, vergleichbar, in dem Caprolactame sehr gut löslich sind. Der Einsatz von MTBE und Kohlendioxid in Kombination hat die vorteilhafte Wirkung, dass die Brennbarkeit des MTBE durch die Anwesenheit des Kohlendioxids weniger kritisch ist. Ferner lassen sich durch den Einsatz von MTBE als Cosolvent noch bessere Caprolactamextraktionsleistungen erzielen. Ein weiterer Vorteil ist, dass durch den Einsatz von MTBE die Bedingungen für die Extraktion noch schonender gestaltet werden können, indem niedrigere Drücke und Temperaturen verwendet werden. Zudem eignet sich MTBE grundsätzlich sehr gut für Extraktionen, da MTBE nicht zur Bildung von Peroxiden neigt.

Bevorzugterweise ist das Extraktionsmittel dazu geeignet, neben den Monomeren und/oder Oligomeren Feuchtigkeit aus dem Bauteil zu entfernen. Dadurch, dass das Bauteil dem Extraktionsmittel ausgesetzt wird, wird demnach ebenso Feuchtigkeit aus dem Bauteil entzogen. Durch diese Eigenschaft hat das Verfahren den Vorteil, dass die Entfernung von Monomeren und/ oder Oligomeren sowie von Feuchtigkeit aus dem Bauteil in einem Schritt erfolgen kann, sodass die Effektivität des Verfahrens erhöht wird. Die Entfernung der Feuchtigkeit aus dem Bauteil ist insbesondere daher von Relevanz, da somit die Weiterverarbeitung des Bauteils, vor allem das Fügen bzw. Kleben, verbessert wird.

Vorteilhafterweise wird das Verfahren bei einer Temperatur von 40 °C bis 80 °C und/oder bei einem Druck von 80 bar bis 100 bar durchgeführt. Dazu wird das Bauteil bevorzugterweise in einen ersten Behälter, vorzugsweise eine Druckkammer, eingebracht, in dem die oben genannten Temperatur- und/oder Druckverhältnisse herrschen.

Vorteilhafterweise weist das Verfahren ferner einen Schritt zur Rückgewinnung der aus dem Bauteil extrahierten Substanzen aus dem Extraktionsmittel auf. Unter den extrahierten Substanzen sind die im Extraktionsmittel gelösten Verunreinigungen, die Monomere und/oder Oligomere, zu verstehen. Ferner kann darunter die entzogene Feuchtigkeit fallen. Durch den Einsatz eines Extraktionsmittels umfassend ein überkritisches Fluid lassen sich die extrahierten Substanzen, insbesondere die gelösten Verunreinigungen, durch Druckentspannung des Extraktionsmittels, sehr leicht wieder abscheiden. Somit können zum Einen die Monomere und/oder Oligomere und zum Anderen das Extraktionsmittel, ohne gelöste Verunreinigungen, wiedergewonnen und somit erneut verwendet werden. Besonders bevorzugt wird das Gas auf einen Druck von unter 70 bar gebracht, wobei sich das Gas durch den Joule-Thomson Effekt abkühlt.

Insbesondere durchläuft das Extraktionsmittel einen Kreislauf. Zunächst durchfließt es einen ersten Behälter umfassend das Bauteil, wobei das Bauteil auf diese Weise von Monomeren und/oder Oligomeren und/oder Feuchtigkeit befreit wird. Zum Einbringen des Bauteils in den ersten Behälter wird insbesondere ein zweiter gasdurchlässiger Behälter verwendet. Vorteilhafterweise wird ein Gestell in den zweiten Behälter eingebracht. Dabei umfasst das Gestell bevorzugterweise mindestens zwei, vorteilhafterweise drei, runde, plattenförmige Elemente, die mit, insbesondere drei, stabförmigen Verbindungsmitteln miteinander verbunden sind. Dabei ist der Durchmesser der runden Elemente gleich groß. Ferner sind die runden Elemente vorteilhafterweise gasdurchlässig ausgebildet, indem diese insbesondere Löcher zum Durchströmen von Gas aufweisen Insbesondere ist ein rundes Element an einem Ende des Gestells angeordnet, während ein anderes rundes Element an dem anderen Ende des Gestells angeordnet ist. Ein oder mehrere weitere Elemente können zwischen den beiden, an den Enden angeordneten Elementen angeordnet sein. Die runden Elemente sind insbesondere parallel zueinander angeordnet. Dabei erstrecken sich die Verbindungsmittel bevorzugterweise senkrecht zu den Ebenen der runden Elemente. An einem Ende des Gestells, insbesondere an dem dort angeordneten runden Element, ist ein Griff zum Greifen und Bewegen des Gestells angeordnet. Die runden Ebenen dienen dazu, mindestens ein Bauteil, bevorzugterweise mehrere Bauteile oder eine Baugruppe, darauf zu platzieren. Anschließend wird das Gestell, insbesondere mithilfe des Griffs, in den zweiten Behälter eingebracht. Der zweite Behälter ist bevorzugterweise als Hülse ausgebildet. Dazu weist der zweite Behälter insbesondere eine röhrenförmige, längliche Form auf und ist derart ausgebildet, dass das Gestell in die Hülse, insbesondere an einer seiner Stirnenden, hineingesteckt werden kann. Vorteilhafterweise sind die Größenverhältnisse des Gestells und des zweiten Behälters aufeinander angepasst. Der zweite Behälter ist gasdurchlässig ausgebildet, wobei vorteilhafterweise zumindest seine beiden Stirnenden gasdurchlässig ausgebildet sind. Der zweite Behälter wird in den ersten Behälter zur Entfernung der Monomere und/oder Oligomere eingeschleust. Durch die gasdurchlässige Ausbildung des zweiten Behälters sowie des Gestelles kann das Extraktionsmittel, bevorzugterweise von dem einen Ende des zweiten Behälters zu dem anderen Ende des zweiten Behälters, diesen durchströmen, wobei dabei Monomere und/oder Oligomere und/oder Feuchtigkeit aus dem Bauteil entfernt wird.

Dabei herrscht in dem ersten Behälter zum Entfernen der Monomere und/oder Oligomere vorteilhafterweise eine Temperatur zwischen 40 °C und 80 °C und/oder ein Druck zwischen 80 bar und 100 bar. Nach Austritt aus dem ersten Behälter wird der Druck des Extraktionsmittels, insbesondere auf unter 70 bar, verringert und die Temperatur sinkt ebenfalls. In dem Extraktionsmittel gelöste Verunreinigungen können leicht abgeschieden und entfernt werden. Das gereinigte Extraktionsmittel wird durch Kompression auf einen Druck von mindestens 80 bar gebracht, wobei sich das Gas durch den Joule-Thomson Effekt erneut aufheizt. Für das Aufheizen kann ebenso eine Zusatzheizung verwendet werden. Anschließend wird das Extraktionsmittel dem ersten Behälter in einem Kreislauf erneut zugeführt.

Ferner bevorzugt weist das Verfahren einen Schritt zum Einbringen von Additiven in das Bauteil auf, wobei die Additive in das Extraktionsmittel eingebracht werden. Auf diese Weise können Additive in das Bauteil eingebracht werden. Bei den Additiven handelt es sich insbesondere um Hydrophobierungs- und/oder Oleophobierungsmittel.

Insbesondere betrifft die Erfindung ferner ein Verfahren zur Herstellung eines faserverstärkten Bauteils, wobei das Verfahren zur Herstellung des Bauteils folgende Schritte umfasst: Tränken von textilen Strukturen, insbesondere Fasern und/oder Fasergelege, in einer Lösung, wobei die Lösung geschmolzenes Lactam, insbesondere Caprolactam, sowie ferner bevorzugt ebenfalls Katalysatoren und/oder Aktivatoren, umfasst. Dabei wird die Temperatur des geschmolzenen Lactams bevorzugterweise unterhalb der Starttemperatur gehalten, bei der das Lactam zu Polyamid zu polymerisieren beginnt. Die textilen Strukturen werden abgekühlt und zu dem faserverstärkten Bauteil konfektioniert. Ferner umfasst das Verfahren zur Herstellung des faserverstärkten Bauteils das Auspolymerisieren des Bauteils umfassend Polyamid, bevorzugterweise bei Temperaturen von ca. 100-190°C. Anschließend wird ein Verfahren zur Entfernung von Monomeren und/oder Oligomeren durchgeführt.

Gemäß dem obigen Verfahren wird ein Faserverbundkunststoff unter gleichzeitiger Bildung des Kunststoffes gebildet. Wird ein bereits auspolymerisierter Kunststoff, insbesondere Polyamid, für die Herstellung des Faserverbundkunststoffes verwendet, so zeigt dies - im Vergleich zum Monomer und Oligomeren - eine deutlich höhere Schmelzviskosität. Die höhere Viskosität führt dazu, dass die Polymerschmelze unter höherer Temperatur und höherem Druck eingebracht werden muss. Außerdem besteht die Gefahr, dass sich Fehlstellen im Faserverbundkunststoff bilden, insbesondere nicht mit der Polymerschmelze benetzte Stellen oder Luftbläschen. Um dies zu verhindern, werden dem bereits auspolymerisierten Polymer häufig Verarbeitungshilfsmittel, wie bspw. Weichmacher oder Oberflächenmodifikatoren, hinzugesetzt, die die Schmelzviskosität herabsetzen sollen. Allerdings geht dieser Ansatz in der Regel zu Lasten der Festigkeit der Polymermatrix. Die oben genannten Nachteile werden allerdings allesamt umgangen, indem ein faserverstärkter Kunststoff nicht mittels eines bereits auspolymerisierten Kunststoffes gebildet wird, sondern der Kunststoff gleichzeitig mit der Bildung des Faserverbundkunststoffes gebildet wird. Die im Faserverbundkunststoff verbleibenden Monomere und Oligomere können bevorzugterweise anschließend mittels eines Verfahrens zur Entfernung dieser aus dem Bauteil entfernt werden.

### Kurze Beschreibung der Zeichnung

Es zeigt schematisch:

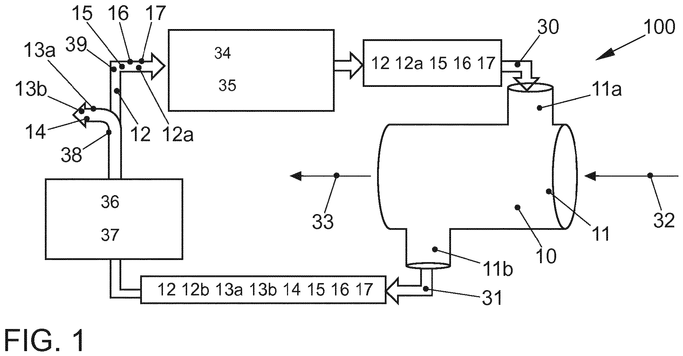

- Figur 1: ein Verfahrensschema eines erfindungsgemäßen Verfahrens.

### Bevorzugte Ausführungsform der Erfindung

Figur 1 zeigt ein Verfahrensschema eines erfindungsgemäßen Verfahrens (100).

Zum Einbringen eines Bauteils in einen ersten Behälter (10) wird ein zweiter gasdurchlässiger Behälter sowie ein Gestell verwendet. Dabei wird das Bauteil zuerst in das Gestellt gelegt und das Gestell in den zweiten Behälter geschoben. Der zweite Behälter wird in den ersten Behälter (10) eingeschleust (32).

Das Extraktionsmittel (12, 12a, 12b) durchläuft einen Kreislauf. Bei dem Extraktionsmittel (12, 12a, 12b) handelt es sich um ein überkritisches Fluid (15), das Kohlendioxid (16) und MTBE (17) als Cosolvent aufweist. Das reine Extraktionsmittel (12, 12a) wird zunächst kompressiert (34) und aufgeheizt (35). Das Aufheizen (35) erfolgt automatisch durch die Druckerhöhung und die damit einhergehende Temperaturerhöhung durch den Joule-Thomson Effekt oder mittels einer extra dafür vorgesehenen Heizung. Das Extraktionsmittel (12, 12a) wird auf eine Temperatur zwischen 40°C und 80 °C und einen Druck zwischen 80 bar bis 100 bar gebracht. Das Extraktionsmittel (12, 12a) wird mittels eines Einlasses (11a) in einen ersten Behälter (10) einer Druckkammer (11), eingebracht, in dem es um das in den ersten Behälter (10) eingeschleuste Bauteil fließt. Durch den Kontakt zwischen der Oberfläche des Bauteils und dem Extraktionsmittel werden Monomere (13a) und Oligomere (13b) sowie Feuchtigkeit (14) aus dem Bauteil gelöst. Diese finden sich anschließend in gelöster Form im Extraktionsmittel (12, 12b) wieder, das dadurch verunreinigt vorliegt. Nach Entfernung der Monomere (13a) und Oligomere (13b) wird das verunreinigte Extraktionsmittel (12, 12b) aus dem Auslass (11b) des ersten Behälters (10) gelassen (31). Ferner wird das Bauteil aus dem ersten Behälter (10) ausgeschleust (33). Das Extraktionsmittel (12, 12b) umfasst nach der Extraktion das überkritische Fluid (15), sprich überkritisches Kohlendioxid (16) sowie MTBE (17), sowie Monomere (13a), Oligomere (13b) und Feuchtigkeit (14), die aus dem Bauteil entfernt wurden. Das verunreinigte Extraktionsmittel (12, 12b) wird dekomprimiert (36) und aufgrund des Joule-Thomson Effekts abgekühlt (37). Im Anschluss kann eine einfach Abtrennung (38) der Verunreinigungen, das heißt der Monomere (13a) und Oligomere (13b) und der Feuchtigkeit bzw. des Wassers (14), erfolgen. In gereinigter Form kann das Extraktionsmittel (12, 12a) erneut dem ersten Behälter (10) zugeführt werden, um ein anderes Bauteil von Verunreinigungen zu befreien.

### Bezugszeichenliste

- 100: Verfahren
- 10: erster Behälter
- 11: Druckkammer
- 11a: Einlass
- 11b: Auslass
- 12: Extraktionsmittel
- 12a: Extraktionsmittel, rein
- 12b: Extraktionsmittel, verunreinigt
- 13a: Monomere
- 13b: Oligomere
- 14: Wasser, Feuchtigkeit
- 15: überkritisches Fluid
- 16: Kohlendioxid
- 17: MTBE

- 30: Einlassen des Extraktionsmittels
- 31: Auslassen des Extraktionsmittels
- 32: Einschleusen eines Bauteils
- 33: Ausschleusen des Bauteils
- 34: Kompression des Extraktionsmittels
- 35: Aufheizen des Extraktionsmittels
- 36: Dekomprimierung des Extraktionsmittels
- 37: Abkühlung des Extraktionsmittels
- 38: Abtrennung von Monomeren und/oder Oligomeren und/oder Wasser
- 39: Rückführung des gereinigten Extraktionsmittels

## Patentansprüche

1. Verfahren (100) zur Entfernung von Monomeren (13a) und/oder Oligomeren (13b) aus einem durch Polymerisation entstandenen Bauteil, umfassend die Verwendung eines Extraktionsmittels (12) zur Entfernung der Monomere (13a) und/oder Oligomere (13b), **dadurch gekennzeichnet, dass** das Bauteil faserverstärkt ausgebildet ist, wobei das Extraktionsmittel (12) ein überkritisches Fluid (15) umfasst.

2. Verfahren (100) zur Entfernung von Monomeren (13a) und/oder Oligomeren (13b) aus einem durch Polymerisation entstandenen Bauteil nach Anspruch 1, **dadurch gekennzeichnet, dass** das Bauteil faserverstärktes Polyamid umfasst, wobei es sich bei den Monomoren (13a) insbesondere um Lactam-Monomere handelt.

3. Verfahren (100) zur Entfernung von Monomeren (13a) und/oder Oligomeren (13b) aus einem durch Polymerisation entstandenen Bauteil nach einem der Ansprüche 1 oder 2, **dadurch gekennzeichnet, dass** das überkritische Fluid (15) überkritisches Kohlendioxid (16) und/oder Methyl-ferf.-butylether (17) umfasst, wobei Methyl-ferf.-butylether (17) insbesondere als Cosolvent eingesetzt wird.

4. Verfahren (100) zur Entfernung von Monomeren (13a) und/oder Oligomeren (13b) aus einem durch Polymerisation entstandenen Bauteil nach einem der vorherigen Ansprüche, **dadurch gekennzeichnet, dass** das Extraktionsmittel (12) dazu geeignet ist, zusätzlich Feuchtigkeit (14) aus dem Bauteil zu entfernen.

5. Verfahren (100) zur Entfernung von Monomeren (13a) und/oder Oligomeren (13b) aus einem durch Polymerisation entstandenen Bauteil nach einem der vorherigen Ansprüche, **dadurch gekennzeichnet, dass** das Verfahren (100) bei einer Temperatur zwischen 40 °C und 80 °C und/oder bei einem Druck zwischen 80 bar und 100 bar durchgeführt wird.

6. Verfahren (100) zur Entfernung von Monomeren (13a) und/oder Oligomeren (13b) aus einem durch Polymerisation entstandenen Bauteil nach einem der vorherigen Ansprüche, **dadurch gekennzeichnet, dass** das Verfahren (100) ferner einen Schritt zur Rückgewinnung von aus dem Bauteil extrahierten Substanzen aus dem Extraktionsmittel (12) umfasst.

7. Verfahren (100) zur Entfernung von Monomeren (13a) und/oder Oligomeren (13b) aus einem durch Polymerisation entstandenen Bauteil nach einem der vorherigen Ansprüche, **dadurch gekennzeichnet, dass** das Verfahren (100) ferner einen Schritt zum Einbringen von Additiven in das Bauteil aufweist, wobei die Additive in das Extraktionsmittel (12) eingebracht werden.

8. Verfahren zur Herstellung eines faserverstärkten Bauteils, umfassend folgende Schritte: Tränken von textilen Strukturen in einer Lösung, wobei die Lösung geschmolzenes Lactam umfasst, Abkühlen der textilen Strukturen, Konfektionieren der abgekühlten textilen Strukturen zu dem faserverstärkten Bauteil, Auspolymerisieren des Bauteils umfassend Polyamid, bevorzugterweise bei Temperaturen von 100°C bis 190°C, Durchführung eines Verfahrens zur Entfernung von Monomeren (13a) und/oder Oligomeren (13b) aus dem durch Polymerisation entstandenen Bauteils nach einem der Ansprüche 1 bis 7.

## Claims

1. Method (100) for removing monomers (13a) and/or oligomers (13b) from a polymerized component comprising the use of an extraction agent (12) to remove the monomers (13a) and/or oligomers (13b), **characterized in that** the component is fiber-reinforced, wherein the extraction agent (12) comprises a supercritical fluid (15).

2. Method (100) for removing monomers (13a) and/or oligomers (13b) from a component resulting from polymerization according to claim 1, **characterized in that** the component comprises fiber-reinforced polyamide, while the monomer (13a) relates, in particular, to lactam monomers.

3. Method (100) for removing monomers (13a) and/or oligomers (13b) from a component resulting from polymerization according to one of claims 1 or 2, **characterized in that** the supercritical fluid (15) is supercritical carbon dioxide (16) and/or methyl tert-butyl ether (17), wherein the methyl tert-butyl ether (17) is used, in particular, as a co-solvent.

4. Method (100) for removing monomers (13a) and/or oligomers (13b) from a component resulting from polymerization according to one of the preceding claims, **characterized in that** the extraction agent (12) is suitable for removing additional moisture (14) from the component.

5. Method (100) for removing monomers (13a) and/or oligomers (13b) from a component resulting from polymerization according to one of the preceding claims, **characterized in that** the method (100) is implemented at a temperature between 40°C and 80°C and/or at a pressure between 80 bar and 100 bar.

6. Method (100) for removing monomers (13a) and/or oligomers (13b) from a component formed by polymerization according to one of the preceding claims, **characterized in that** the method (100) further comprises a step for recovering from the component extracted substances from the extraction agent (12).

7. Method (100) for removing monomers (13a) and/or oligomers (13b) from a component resulting from polymerization according to one of the preceding claims, **characterized in that** the method (100) further comprises a step for introducing additives into the component, wherein the additives are introduced into the extraction agent (12).

8. Method for producing a fiber-reinforced component, comprising the following steps: immersing the textile structures in a solution, wherein the solution comprises molten lactam, cooling the textile structures, converting the cooled textile structures into the fiber-reinforced component, polymerizing the component comprising polyamide, preferably at temperatures of 100°C to 190°C, implementing a method for the removal of monomers (13a) and/or oligomers (13b) from the polymer-formed component according to one of claims 1 to 7.

## Revendications

1. Procédé (100) pour éliminer des monomères (13a) et/ou des oligomères (13b) d'une pièce fabriquée par polymérisation, comprenant l'utilisation d'un agent d'extraction (12) pour éliminer les monomères (13a) et/ou des oligomères (13b), **caractérisé en ce que** la pièce est renforcée par des fibres, l'agent d'extraction (12) comprenant un fluide supercritique (15).

2. Procédé (100) pour éliminer des monomères (13a) et/ou des oligomères (13b) d'une pièce fabriquée par polymérisation selon la revendication 1, **caractérisé en ce que** la pièce comprend un polyamide renforcé par des fibres, les monomères (13a) étant en particulier des lactames monomères.

3. Procédé (100) pour éliminer des monomères (13a) et/ou des oligomères (13b) d'une pièce fabriquée par polymérisation selon l'une des revendications 1 ou 2, **caractérisé en ce que** le fluide supercritique (15) comprend du dioxyde de carbone supercritique (16) et/ou du méthyl-tert-butyléther (17), le méthyl-tert-butyléther (17) étant utilisé en particulier en tant que co-solvant.

4. Procédé (100) pour éliminer des monomères (13a) et/ou des oligomères (13b) d'une pièce fabriquée par polymérisation selon l'une des revendications précédentes, **caractérisé en ce que** l'agent d'extraction (12) est apte à éliminer en outre de l'humidité (14) de la pièce.

5. Procédé (100) pour éliminer des monomères (13a) et/ou des oligomères (13b) d'une pièce fabriquée par polymérisation selon l'une des revendications précédentes, **caractérisé en ce que** le procédé (100) est mis en oeuvre à une température comprise entre 40 °C et 80 °C et/ou sous une pression comprise entre 80 bar et 100 bar.

6. Procédé (100) pour éliminer des monomères (13a) et/ou des oligomères (13b) d'une pièce fabriquée par polymérisation selon l'une des revendications précédentes, **caractérisé en ce que** le procédé (100) comprend en outre une étape de récupération, à partir de l'agent d'extraction (12), de substances extraites de la pièce.

7. Procédé (100) pour éliminer des monomères (13a) et/ou des oligomères (13b) d'une pièce fabriquée par polymérisation selon l'une des revendications précédentes, **caractérisé en ce que** le procédé (100) comprend en outre une étape d'introduction d'additifs dans la pièce, les additifs étant incorporés dans l'agent d'extraction (12).

8. Procédé de fabrication d'une pièce renforcée par des fibres, comprenant les étapes suivantes : imprégnation de structures textiles dans une solution, la solution comprenant du lactame fondu, refroidissement des structures textiles, assemblage des structures textiles refroidies pour donner la pièce renforcée par des fibres, polymérisation de la pièce comprenant un polyamide, de préférence à des températures de 100 °C à 190 °C, mise en oeuvre d'un procédé d'élimination de monomères (13a) et/ou d'oligomères (13b) de la pièce fabriquée par polymérisation selon l'une des revendications 1 à 7.
